# EUROPÄISCHE PATENTSCHRIFT

(11) **EP 2 888 217 B1**
(45) Veröffentlichungstag und Bekanntmachung des Hinweises auf die Patenterteilung: **23.11.2016**
(21) Anmeldenummer: 13782940.4
(22) Anmeldetag: 22.08.2013
(51) Int. Cl.: C01B 3/34, C10G 2/00, C10G 3/00, F17D 1/16, F17D 1/17

(54) **VERFAHREN ZUR VERBESSERUNG DER TRANSPORTFÄHIGKEIT VON SCHWEREM ROHÖL**
METHOD FOR IMPROVING THE TRANSPORTABILITY OF HEAVY CRUDE OIL
PROCÉDÉ D'AMÉLIORATION DE LA CAPACITÉ DE TRANSPORT DE BRUT LOURD

(43) Veröffentlichungstag der Anmeldung: 01.07.2015
(73) Patentinhaber: Wagner, Ulrich, 06406 Bernburg (DE); Balthasar, Wolff, 40833 Ratingen (DE); Müller, Dierk, 61184 Karben (DE)
(72) Erfinder: Wagner, Ulrich, 06406 Bernburg (DE); Balthasar, Wolff, 40833 Ratingen (DE); Müller, Dierk, 61184 Karben (DE)
(74) Vertreter: Patentanwälte Bauer Vorberg Kayser
(86) Internationale Anmeldenummer: PCT/DE2013/100305
(87) Internationale Veröffentlichungsnummer: WO 2015/024540

(56) Entgegenhaltungen:
- CA-A1- 2 019 760
- US-A- 3 870 063
- US-A- 4 076 761
- US-A1- 2005 197 412
- US-A1- 2009 014 336
- HASAN S W ET AL: "Heavy crude oil viscosity reduction and rheology for pipeline transportation", FUEL, IPC SCIENCE AND TECHNOLOGY PRESS, GUILDFORD, GB, Bd. 89, Nr. 5, 1. Mai 2010 (2010-05-01), Seiten 1095-1100, XP026930481, ISSN: 0016-2361, DOI: 10.1016/J.FUEL.2009.12.021 [gefunden am 2010-01-05]

## Beschreibung

Die Erfindung bezieht sich auf ein Verfahren zur Verbesserung der Transportfähigkeit von schwerem Rohöl.

Es ist allgemein bekannt, in einer Erdöllagerstätte gefördertes Erdöl als Rohöl zur weiteren Verarbeitung in einer Raffinerie über Rohrleitungen zu transportieren, wobei sich diese über Entfernungen von mehreren tausend Kilometern erstrecken können.

Lassen sich in einer Erdöllagerstätte nur noch schwere oder superschwere Rohöle gewinnen, also solche z.B. mit einer Viskosität von in weniger als 40 000 mPa s bzw. 24° API (API = amerikanische Dichteeinheit für Rohöl), so ist ein längerer Transport derartiger Rohöle durch Rohrleitungen ohne zusätzliche Maßnahmen nicht mehr möglich bzw. unwirtschaftlich.

Es wurde daher bereits nach verschiedenen Möglichkeiten gesucht, die Transportfähigkeit von schwerem Rohöl, insbesondere durch Verringerung der Viskosität, zu verbessern. Aus der DE 36 09 641 A1 ist bekannt, zum Transport Von zähfließendem Rohöl dieses in eine Öl-in-Wasser-Emulsion mit mindestens 10 bis 15 % Wasser unter Zusatz eines speziellen Emulgators auf Basis Oxethylat umzuwandeln.

Gemäß WO 2011/006024 A2 wird zur Verringerung der Viskosität vorgeschlagen, ein Polymer bestehend aus einem nicht-ionischen Monomeren und mindestens 25 Molprozent kationischer Monomere einzusetzen.

Der Zusatz von Emulgatoren oder Polymeren als Verdünnungsmittel ist mit zusätzlichen Kosten verbunden und erfordert, dass diese vor der Raffination des Rohöls wieder entfernt werden müssen.

In der DE 2 039 329 A wird zur Transportverbesserung vorgeschlagen, Rohöl auf Temperaturen von 340 bis 650 °C zu erhitzen. Dies ist jedoch mit einem erheblichen Aufwand verbunden und bei Transportstrecken von mehreren tausend Kilometern wirtschaftlich nicht realisierbar.

Die US 3,870,063 schlägt vor, an der Förderstelle dem Rohöl einen Zusatz wie Benzin zur Verringerung der Viskosität zuzufügen. Dieser Zusatz soll dann am fernen Ende der Pipeline von dem Rohöl getrennt und über eine separate Pipeline oder mittels Transportfahrzeugen wieder an die Förderstelle zum Schließen des Kreislaufes zurückbefördert werden.

Die US 2005/0197412 A1 beschreibt ein Verfahren zur Herstellung eines Methanol-Gemisches mit erhöhtem Ethanofanteil aus Erdgas.

Die US 4,076,761 offenbart ein Verfahren zur Umwandlung von fossilen Brennstoffen in

Die US 2009/0014336 A1 zeigt ein Verfahren zur Herstellung von Methanol aus Kohlendioxid von Industrie- oder Kraftwerksabgasen oder aus der Atmosphäre.

In der US 7,861,737 B2 wird vorgeschlagen, zur Transportverbesserung von Schweröl diesem erst ein Lösungsmittel, wie z.B. Naphtha, zuzusetzen, um das Schwer- bzw. Rohöl zu verdünnen. Danach wird Dimethylether (DME) in flüssigem oder gasförmigem Zustand unter hohem Druck, mindesten 4 bar, eingetragen. Der Zusatz von DME soll zu einer deutlichen Verringerung der Viskosität des Schwer- bzw. Rohöls führen, wodurch die Transportfähigkeit verbessert wird.

Der Nachteil dieser Lösung ist, dass zwei Komponenten, Naphtha und DME, bereitgestellt, zur Erdöllagerstätte transportiert und dem Schwer- bzw. Rohöl zugesetzt werden müssen. Der Zusatz von DME als Komponente mit einem hohen Partialdruck ist mit zusätzlichem Aufwand beim Mischen und Verpumpen verbunden. Naphtha enthält überwiegend Cycloparaffine. Die Zusätze Naphtha und DME müssen während der nachfolgenden Raffination des Rohöls destillativ mit abgetrennt werden. DME ist unter Normalbedingungen ein hochentzündliches Gas. Der Umgang mit diesem hochexplosiven Stoff erfordert erhebliche sicherheitstechnische Aufwendungen.

Aufgabe der Erfindung ist es, ein Verfahren zur Verbesserung der Transportfähigkeit von schwerem Rohöl mittels eines Zusatzes zu schaffen, der kostengünstig herstellbar ist, mit geringem Aufwand dem schweren Rohöl zugesetzt werden kann und zu keinen nachteiligen Auswirkungen bei der nachfolgenden Raffination zu herkömmlichen Benzin führt. Erfindungsgemäß wird die Aufgabe durch die im Anspruch 1 angegebenen Merkmale gelöst. Vorteilhafte Ausgestaltungen und Weiterbildungen der Verfahrensweise sind Gegenstand der Ansprüche 2 bis 15.

Im Bereich einer Erdöllagerstätte wird aus dem geförderten schweren Rohöl eine Menge von 10 bis 40 % an Rohöl abgezweigt und vor Ort über Zwischenstufen, Synthesegasgewinnung, Methanol-Synthese und Gewinnung eines Dimethylether/Methanol/WasserGemisches, in ein wasserhaltiges Kohlenwasserstoffgemisch mit einer Kettenlänge von vorwiegend C4 bis C12, das keine sauerstoffhaltigen Kohlenwasserstoffverbindungen enthält, umgewandelt. Vorwiegend bedeutet hier, dass ca. 80 bis 85 % der Kohlenwasserstoffe eine Kettenlänge von C4 bis C12 aufweisen. Bei den restlichen 15 bis 20 % handelt es sich um Verbindungen mit den Kettellängen C3 bzw. > C12.

Das spezielle Kohlenwasserstoffgemisch wird im Bereich einer Erdöllagerstätte in einer separaten Chemieanlage aus einer Teilmenge an schwerem Rohöl hergestellt und nach erfolgter Entgasung dem schweren Rohöl als viskositätserniedrigendes Mittel zugesetzt, wobei das zu leichtem Rohöl modifizierte schwere Rohöl über Leitungen zu einer Raffinerie transportiert wird und während der nachfolgenden Raffination des leichten Rohöls zu herkömmlichen Benzin die im wasserhaltigen Kohlenwasserstoffgemisch enthaltenen Kohlenwasserstoffe Bestandteil der produzierten Menge an Benzin werden.

Die Abzweigung der Teilmenge an schwerem Rohöl kann kontinuierlich oder diskontinuierlich vorgenommen werden.

Zur Synthesegasgewinnung wird aufbereitetes Rohöl unter Druck vorgewärmt und nachfolgend in mehreren als Reaktoren ausgeführten Vergasern mit vorgewärmtem, heißem Sauerstoff und Dampf in ein Rohgas reformiert.

Das anfallende reformierte und abgekühlte Rohgas wird in zwei Teilströme aufgeteilt, wobei der eine, etwas kleinere Teilstrom über eine Leitung einem CO-Shiftreaktor zugeführt wird, in dem im Rohgas enthaltenes Kohlenmonoxid mit Wasserdampf zu Kohlenstoffdioxid und Wasserstoff umgesetzt wird.

Das am Austritt des Shift-Rektors angefallene Synthesegas wird mit dem anderen, größeren Teilstrom an Rohgas zu einem Gesamtstrom an Synthesegas vermischt.

Der Gesamtstrom an Synthesegas wird abgekühlt und einem Wäscher zur Abtrennung von CO₂ und H₂S zugeführt.

Die mengenmäßige Aufteilung des Rohgases in zwei Teilströme, einen größeren und einen kleineren, wird so vorgenommen, dass das nach dem Wäscher anfallende Synthesegas die für die nachfolgende Methanol-Synthese optimale Stoffmenge (Stöchiometriezahl) von ca. 2,05 bis 2,1 aufweist.

Das erzeugte Synthesegas wird komprimiert und nachfolgend in einem dualen System, bestehend aus einem wassergekühlten und einem gasgekühlten Reaktor, katalytisch in Methanol umgewandelt. Durch nachfolgende Kondensation wird Rohmethanol erhalten. Während der Methanolsynthese wird eine Teilmenge an Synthesegas ausgekreist, im Kreislauf gefahren und dabei auf den erforderlichen Betriebsdruck komprimiert.

Das kondensierte Rohmethanol wird anschließend entgast und von niedrig siedenden und höher siedenden Verbindungen gereinigt. Die destillative Reinigung wird vorzugsweise bei Temperaturen von 70 bis 140 °C vorgenommen. Dadurch stellt sich im Methanol ein Restwassergehalt von mindestens 3 bis 5 % ein.

Das destillierte Methanol wird nachfolgend in einem Festbettreaktor (DME-Reaktor) katalytisch in ein DME (Dimethylether)/Methanol/Wasser-Gemisch umgewandelt und in weiteren adiabatisch arbeitenden Reaktoren im Temperaturbereich von vorzugsweise 320 bis 420 °C in ein Kohlenwasserstoff/Wasser-Gemisch umgewandelt. Zur Temperatureinstellung wird Recyclegas zugeführt, das einer nachgeschalteten Entgasungseinheit entnommen wird.

Das gebildete Kohlenwasserstoffgemisch wird vor dem Inkontaktbringen mit dem schweren Rohöl entwässert und entgast.

Das gebildete Kohlenwasserstoffgemisch wird unmittelbar, im Bereich der Erdöllagerstätte, dem geförderten schweren Rohöl nach der Entnahmestelle, in Förderrichtung gesehen, für die abgezweigte Teilmenge an schweren Rohöl zugeführt.

Aufbereitetes Kohlenwasserstoffgemisch wird auf der Saugseite der zum Transport des Rohöls eingesetzten Pumpe zugeführt und mit diesem vermischt.

Die Abzweigung der Teilmenge an schwerem Rohöl, um dieses in das speziellen Kohlenwasserstoffgemisch umzuwandeln, kann kontinuierlich oder diskontinuierlich vorgenommen werden. Dabei ist es zweckmäßig die Viskosität des geförderten schweren Rohöls zu messen und in Abhängigkeit vom Messergebnis die Menge an Kohlenwasserstoffgemisch dosiert zuzumischen, um leichtes, transportfähiges Rohöl zu erhalten.

Die Erfindung wird nachstehend an einem Beispiel näher erläutert.

In der zugehörigen Zeichnung ist die Verfahrensweise als Fließschema dargestellt.

In einer Erdöllagerstätte werden 646 t/h an schwerem Rohöl (API 23°) gefördert, das in seiner Zusammensetzung aus Kohlenwasserstoffen (517 t/h) und Wasser (129 t/h) besteht.

Das aus unterschiedlichen Bohrlöchern 2 stammende Rohöl wird zu einem gemeinsamen Strom zusammengeführt und gemischt. Aus dem gemeinsamen Strom an Rohöl wird über eine Leitung 3 eine Teilmenge (184,7 t/h) abgezweigt und in einer auf dem Gelände der Erdöllagerstätte errichteten Chemieanlage wie folgt in ein Kohlenwasserstoffgemisch umgewandelt.

Das über die Leitung 3 abgezweigte schwere Rohöl wird bei einem Druck von ca. 80 bar in einem Wärmetauscher oder Erhitzer 4 auf eine Temperatur von 200 °C vorgewärmt und nachfolgend in fünf als Reaktoren ausgeführten Vergasern 5 mit vorgewärmtem Sauerstoff von 220 °C und Dampf in ein Rohgas reformiert.

Der für das Reforming benötigte Sauerstoff wird parallel in einer Luftzerlegungseinheit 25 gewonnen und in einem nachgeschalteten Wärmetauscher oder Erhitzer 26 auf die erforderliche Temperatur erwärmt.

Die Vergaser 5 sind als ausgemauerte Reaktoren ausgeführt, die bei ca. 1400 °C und 60 bar adiabatisch arbeiten. Direkt am Austritt der Reaktoren bzw. Vergaser 5 wird das Rohgas in einem Quenchkühler 6 mit Wasser auf ca. 440 °C abgekühlt.

Das anfallende Rohgas wird in zwei Teilströme geteilt. Der eine Teilstrom (ca. 45 %) wird über die Leitung 8 einem CO-Shiftreaktor 7 zugeführt, in dem im Rohgas enthaltenes Kohlenmonoxid mit Wasserdampf zu Kohlenstoffdioxid und Wasserstoff umgesetzt wird. Am Austritt des Shift-Reaktors 7 wird dem angefallenen Synthesegas die andere, über die Leitung 9 abgezweigte Menge an Rohgas (ca. 55 %) wieder zugemischt. Der Gesamtstrom an Synthesegas wird abgekühlt und über die Leitung 10 einem Wäscher 11 zur Abtrennung von CO₂ und H₂S zugeführt.

Das Synthesegas enthält noch ca. 3 Mol-% an CO₂ und Methan in einer Größenordnung von 0,12 Mol-%.

Die Aufteilung des Rohgases in zwei Teilströme, auf die Leitungen 8 und 9, erfolgt so, dass das nach dem Wäscher 11 anfallende Synthesegas die für die nachfolgende Methanol-Synthese optimale Stoffmenge (Stöchiometriezahl) im Bereich von ca. 2,05 bis 2,1 aufweist.

Zur nachfolgenden Methanol-Synthese liegt das Synthesegas auf der Saugseite des Synthesegas-Kompressors 12 mit einem Druck von 56 bar an und wird weiter bis auf 76 bar komprimiert.

Anschließend wird in einem dualen System 13, bestehend aus einem wassergekühlten und einem gasgekühlten Reaktor, Synthesegas katalytisch im Temperaturbereich von 220 bis 260 °C in Methanol umgewandelt und durch Kondensation ein Rohmethanol, das über die Leitung 14 abgeführt wird, mit folgender Zusammensetzung erhalten:

| | |
|---|---|
| Methanol | 95,6 Gew.-% |
| Kohlendioxid | 0,8 Gew.-% |
| Wasser | 3,2 Gew.-% |
| höhere Alkohole | 0,1 Gew.-% |
| CO, H₂ und CH₄ | 0,4 Gew.- % |

Während der Methanol-Synthese wird eine Teilmenge an Synthesegas über eine Leitung 15 im Kreislauf gefahren und dabei mittels eines weiteren Kompressors 16 auf den erforderlichen Druck komprimiert. Aufgrund der im Synthesegas enthaltenen Verunreinigungen wird über die Leitung 17 eine Teilmenge an Synthesegas aus dem Kreislauf als Purgegas ausgeschleust. Purgegas wird als Brenngas für gefeuerte Überhitzer verwendet.

Das nach der Methanolsynthese in mehreren Stufen kondensierte Rohmethanol wird über die Leitung 14 in einer nachgeschalteten Destillationsanlage 18 entgast und nachfolgend von niedrig siedenden Produkten gereinigt. Gegenüber der klassischen dreistufigen Destillation zur Herstellung von marktfähigem Methanol erfolgt die Destillation in nur einer Kolonne. Im erzeugten Methanol ist noch ein Restwassergehalt von ca. 3 bis 5 % enthalten, aufgrund der aus CO₂ gebildeten Methanolmenge.

Insgesamt fallen nach der Destillation 218 t/h Rohmethanol an, die in etwa noch 7 t Wasser enthalten.

Das destillierte Methanol wird nachfolgend in einem Festbettreaktor (DME-Reaktor) 19 katalytisch in ein DME (Dimethylether)/Methanol/Wasser-Gemisch umgewandelt.

Das Reaktionsprodukt aus dem DME-Reaktor 19 wird in weiteren fünf adiabatisch arbeitenden Reaktoren 21 im Temperaturbereich von 320 bis 420 °C in ein Kohlenwasserstoff/Wasser-Gemisch umgewandelt, wobei zur Temperatureinstellung den Reaktoren 21 Recyclegas zugeführt wird, das über eine Leitung 20 einer nachgeschalteten Entgasungseinheit 22 entnommen wird.

Aus 218 t/h Methanol werden 92 t/h Kohlenwasserstoffe und 126 t/h Wasser erhalten. Dieses wässrige Kohlenwasserstoffgemisch mit einer Kettenlänge von vorwiegend C4 bis C12 enthält keine sauerstoffhaltigen Kohlenwasserstoffverbindungen und wird abschließend in der Entgasungseinheit 22 entgast.

Dieses spezielle Kohlenwasserstoffgemisch wird nunmehr dem schweren Rohöl zur Verbesserung der Transportfähigkeit zugesetzt. Der Zusatz kann drucklos über eine Mischeinrichtung erfolgen.

Gemäß diesem Beispiel werden dem unaufbereiteten schweren Rohöl (461 t/h) kontinuierlich 218 t wässriges Kohlenwasserstoffgemisch pro Stunde zugemischt. Im Fließschema ist die Stelle des Zumischens mit dem Bezugszeichen 23 gekennzeichnet.

Die Zumischung des wässrigen Kohlenwasserstoffgemisches erfolgt vor der zentralen Ölaufbereitung 1.

Nachfolgend werden in der zentralen Ölaufbereitung 1 aus dem verdünnten Rohölgemisch die wässrige Phase und noch vorhandene gasförmige Bestandteile, wie Stickstoff, Kohlendioxid, Methan und Ethan, abgetrennt.

Es werden 458 t/h aufbereitetes Rohöl mit einem API 36° erhalten das der Qualität von leichtem Rohöl entspricht. Dieses leichte Rohöl kann nunmehr in herkömmlichen Transportrohrleitungen 24 mit zwischengeschalteten Pumpstationen über tausende von Kilometern ohne Probleme zu einer Erdölraffinationsanlage transportiert werden.

Der Vorteil bei der weiteren Verarbeitung bzw. Raffination des leichten Rohöls zu Benzin ist, dass die zur Verbesserung der Transportfähigkeit zugesetzten speziellen Kohlenwasserstoffe absolut keinen Nachteil auf das Raffinationsverfahren haben und als wirksamer Bestandteil des gewonnenen Benzins erhalten bleiben.

Neben der Transportverbesserung kann das gesamte schwere Rohöl nahezu verlustfrei in herkömmliches Benzin umgewandelt werden.

Der erfindungsgemäße Zusatz muss nicht wieder entfernt werden und hat keine nachteiligen Einflüsse auf das Raffinationsverfahren und das Endprodukt (Benzin).

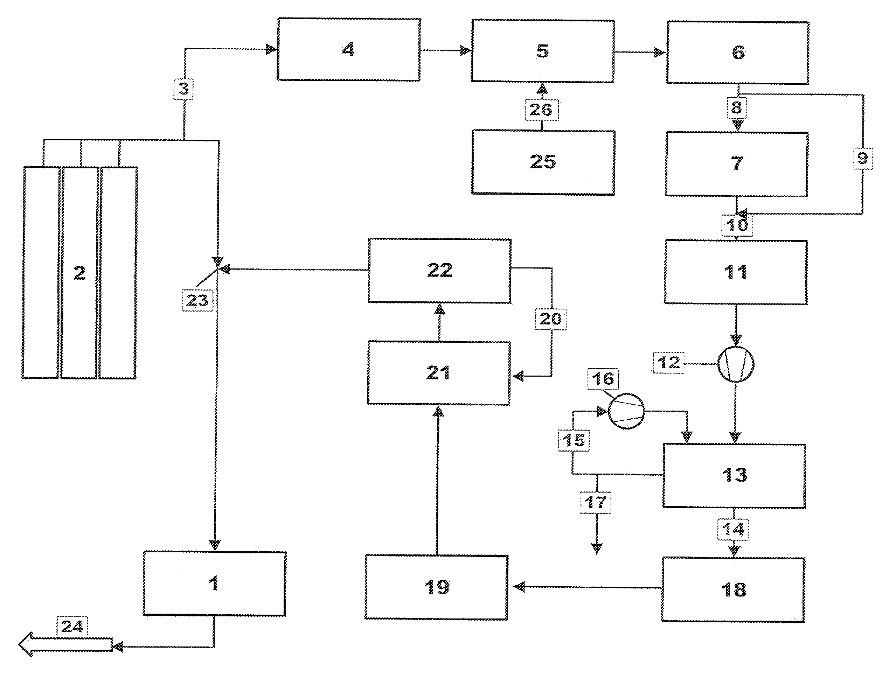

## Patentansprüche

1. Verfahren zur Verbesserung der Transportfähigkeit von schwerem Rohöl, wobei dem schweren Rohöl ein viskositätserniedrigendes Mittel zugesetzt wird, **dadurch gekennzeichnet, dass** im Bereich einer Erdöllagerstätte aus dem geförderten schweren Rohöl eine Menge von 10 bis 40 % an Rohöl abgezweigt und vor Ort über Zwischenstufen, Synthesegasgewinnung, Methanol-Synthese und Gewinnung eines Dimethylether/Methanol/Wasser-Gemisches, in ein wasserhaltiges Kohlenwasserstoffgemisch mit einer Kettenlänge von vorwiegend C4 bis C12, das keine sauerstoffhaltigen Kohlenwasserstoffverbindungen enthält, umgewandelt wird, und das nach erfolgter Entgasung dem schweren Rohöl als viskositätserniedrigendes Mittel zugesetzt wird, wobei das zu leichtem Rohöl modifizierte schwere Rohöl über Leitungen zu einer Raffinerie transportiert wird und während der nachfolgenden Raffination des leichten Rohöls zu herkömmlichen Benzin die im wasserhaltigen Kohlenwasserstoffgemisch enthaltenen Kohlenwasserstoffe Bestandteil der produzierten Menge an Benzin werden.

2. Verfahren nach Anspruch 1, daduruh gekennzeichnet, dass zur Synthesegasgewinnung aufbereitetes Rohöl unter Druck vorgewärmt und nachfolgend in mehreren als Reaktoren ausgeführte Vergaser mit vorgewärmtem, heißem Sauerstoff und Dampf in ein Rohgas reformiert wird.

3. Verfahren nach Anspruch 2, **dadurch gekennzeichnet, dass** das anfallende reformierte und abgekühlte Rohgas in zwei Teilströme geteilt wird, wobei, der eine Teilstrom über eine Leitung einem CO-Shiftreaktor zugeführt wird, in dem im Rohgas enthaltenes Kohlenmonoxid mit Wasserdampf zu Kohlenstoffdioxid und Wasserstoff umgesetzt wird.

4. Verfahren nach Anspruch 3, **dadurch gekennzeichnet, dass** das am Austritt des Shift-Reaktors angefallene Synthesegas wieder mit dem anderen Teilstrom an Rohgas zu einem Gesamtstrom an Synthesegas vermischt wird.

5. Verfahren nach Anspruch 4, **dadurch gekennzeichnet, dass** der Gesamtstrom an Synthesegas abgekühlt und einem Wäscher zur Abtrennung von CO₂ und H₂S zugeführt wird.

6. Verfahren nach einem der Ansprüche 3 bis 5, **dadurch gekennzeichnet, dass** die mengenmäßige Aufteilung der Rohgase in zwei Teilströme so erfolgt, dass das nach dem Wäscher anfallende Synthesegas die für die nachfolgende Methanol-Synthese erforderliche Stoffmenge (Stöchiometriezahl) von ca. 2,05 bis 2,1 aufweist.

7. Verfahren nach einem der Ansprüche 1 bis 6, **dadurch gekennzeichnet, dass** das erzeugte Synthesegas komprimiert und nachfolgend in einem dualen System, bestehend aus einem wassergekühlten und einem gasgekühlten Reaktor, katalytisch in Methanol umgewandelt und durch Kondensation ein Rohmethanol erhalten wird.

8. Verfahren nach Anspruch 7, **dadurch gekennzeichnet, dass** während der Methanolsynthese eine Teilmenge an Synthesegas ausgekreist, im Kreislauf gefahren und dabei auf den erforderlichen Betriebsdruck komprimiert wird.

9. Verfahren nach Anspruch 7 oder 8, **dadurch gekennzeichnet, dass** das kondensierte Rohmethanol entgast und nachfolgend von niedrig siedenden und höher siedenden Verbindungen gereinigt wird, wobei die destillative Reinigung bei Temperaturen von 70 bis 140 °C vorgenommen wird und sich im Methanol ein Restwassergehalt von mindestens 3 bis 5 % einstellt.

10. Verfahren nach Anspruch 9, **dadurch gekennzeichnet, dass** das destillierte Ethanol nachfolgend in einem Festbettreaktor (DME-Reaktor) katalytisch in ein DME (Dimethylether)/Methanol/Wasser-Gemisch umgewandelt und in weiteren adiabatisch arbeitenden Reaktoren im Temperaturbereich von 320 bis 420 °C in ein Kohlenwasserstoff/Wasser-Gemisch umgewandelt wird, wobei zur Temperatureinstellung Recyclegas zugeführt wird, das einer nachgeschalteten Entgasungseinheit entnommen wird.

11. Verfahren nach einem der Ansprüche 1 bis 10, **dadurch gekennzeichnet, dass** das gebildete Kohlenwasserstoffgemisch vor dem Inkontaktbringen mit dem schweren Rohöl entwässert und entgast wird.

12. Verfahren nach einem der Ansprüche 1 bis 11, **dadurch gekennzeichnet, dass** das gebildete Kohlenwasserstoffgemisch unmittelbar, im Bereich der Erdöllagerstätte, dem geförderten schweren Rohöl nach der Entnahmestelle für die abgezweigte Teilmenge an schweren Rohöl, in Förderrichtung gesehen, zugeführt wird.

13. Verfahren nach einem der Ansprüche 1 bis 12, **dadurch gekennzeichnet, dass** aufbereitetes Kohlenwasserstoffgemisch auf der Saugseite der zum Transport des Rohöls eingesetzten Pumpe zugeführt wird.

14. Verfahren nach einem der Ansprüche 1 bis 13, **dadurch gekennzeichnet, dass** die Abzweigung der Teilmenge an schwerem Rohöl kontinuierlich oder diskontinuierlich vorgenommen wird.

15. Verfahren nach einem der Ansprüche 1 bis 14, **dadurch gekennzeichnet, dass** die Viskosität des geförderten schweren Rohöls gemessen und in Abhängigkeit vom aktuellen Messergebnis die Menge an Kohlenwasserstoffgemisch dosiert zugesetzt wird, um leichtes Rohöl zu erhalten.

## Claims

1. A method for improving the transportability of heavy crude oil, wherein a viscosity-reducing agent is added to the heavy crude oil, **characterized in that** a quantity of 10 to 40% crude oil is branched off from the produced crude oil in the region of an oil deposit and is converted on-site into a water-containing hydrocarbon mixture with a chain length of predominantly C4 to C12, which contains no oxygen-containing hydrocarbon compounds, via intermediate steps, synthesis gas production, methanol synthesis and the production of a dimethyl ether/methanol/water mixture, and which, after a completed degassing process, is added to the heavy crude oil as a viscosity-reducing agent, wherein the heavy crude oil, which has been modified into a light crude oil, is transported via pipelines to a refinery, and the hydrocarbons contained in the water-containing hydrocarbon mixture become a constituent of the produced quantity of gasoline during the subsequent refining process of the light crude oil into conventional gasoline.

2. The method according to claim 1, **characterized in that** crude oil processed for synthesis gas production is pre-heated under pressure and is then reformed into a crude gas in several gasifiers configured as reactors with pre-heated, hot oxygen and steam.

3. The method according to claim 2, **characterized in that** the generated reformed and cooled-off crude gas is divided into two partial flows, wherein the one partial flow is supplied via a pipeline to a CO shift reactor, in which carbon monoxide contained in the crude gas is reacted with water vapor into carbon dioxide and hydrogen.

4. The method according to claim 3, **characterized in that** the synthesis gas generated at the outlet of the shift reactor is mixed again with the other partial flow of crude gas to form a total flow of synthesis gas.

5. The method according to claim 4, **characterized in that** the total flow of synthesis gas is cooled down and supplied to a washer for separating CO₂ and H₂S.

6. The method according to any one of the claims 3 to 5, **characterized in that in that** the quantitative division of the crude gases into two partial flows takes place in such a way that the synthesis gas generated subsequent to the washer has the quantity of substance (stoichiometric number) of approx. 2.05 to 2.1 required for the subsequent methanol synthesis.

7. The method according to any one of the claims 1 to 6, **characterized in that** the generated synthesis gas is compressed and then catalytically converted into methanol in a dual system consisting of a water-cooled and a gas-cooled reactor, and a crude methanol is obtained by condensation.

8. The method according to claim 7, **characterized in that** during the methanol synthesis, a sub-quantity of synthesis gas is purged, circulated and, in the process, compressed to the required operating pressure.

9. The method according to claim 7 or 8, **characterized in that** the condensed crude methanol is degassed and then purified from low-boiling and higher-boiling compounds, wherein the purification by distillation is carried out at temperatures of 70 to 140°C in two columns and a residual water content of at least 3 to 5% in the methanol is reached.

10. The method according to claim 9, **characterized in that** the distilled methanol is then catalytically converted into a DME (dimethyl ether/methanol/water mixture in a fixed-bed reactor (DME reactor) and converted into a hydrocarbon/water mixture in further adiabatically operating reactors in the temperature range 320 to 420°C, wherein recycle gas, which is drawn from a downstream degassing unit, is added for adjusting the temperature.

11. The method according to any one of the claims 1 to 10, **characterized in that** the formed hydrocarbon mixture is dewatered and degassed prior to being brought into contact with the heavy crude oil.

12. The method according to any one of the claims 1 to 11, **characterized in that** the formed hydrocarbon mixture is immediately, in the region of the oil deposit, supplied to the produced heavy crude oil subsequent to the extraction point for the branched-off sub-quantity of heavy crude oil, viewed in the transporting direction.

13. The method according to any one of the claims 1 to 12, **characterized in that** processed hydrocarbon mixture is supplied on the suction side of the pump used for transporting the crude oil.

14. The method according to any one of the claims 1 to 13, **characterized in that** the branching off of the sub-quantity of heavy crude oil is carried out continuously or discontinuously.

15. The method according to any one of the claims 1 to 14, **characterized in that** the viscosity of the produced heavy crude oil is measured and the quantity of hydrocarbon mixture is added in a dosed manner, depending on the current measurement result, in order to obtain a light crude oil.

## Revendications

1. Procédé destiné à améliorer la transportabilité de pétrole brut lourd, dans lequel un agent réducteur de viscosité est ajouté au pétrole brut lourd, **caractérisé par le fait qu'**une quantité comprise entre 10 et 40 % de pétrole brut est prélevée, au niveau d'un gisement de pétrole, sur le pétrole brut lourd produit et est convertie sur place, par des étapes intermédiaires, la production de gaz de synthèse, la synthèse de méthanol et la production d'un mélange de diméthyléther/méthanol/eau, en un mélange d'hydrocarbures contenant de l'eau et ayant une longueur de chaîne principalement en C4 à C12 qui ne contient pas de composés d'hydrocarbures contenant de l'oxygène, et qui, après avoir réalisé un dégazage, est ajouté, comme agent réducteur de viscosité, au pétrole brut lourd, dans lequel le pétrole brut lourd modifié en pétrole brut léger est transporté par des conduites à une raffinerie, et, pendant l'affinage subséquent du pétrole brut léger destiné à obtenir de l'essence conventionnelle, les hydrocarbures contenus dans le mélange d'hydrocarbures contenant de l'eau deviennent un composant de la quantité produite d'essence.

2. Procédé selon la revendication 1, **caractérisé en ce que**, pour la production de gaz de synthèse, du pétrole brut traité est préchauffé sous pression et est reformé ensuite, dans une pluralité de gazéificateurs réalisés en tant que réacteurs, avec de l'oxygène chaud préchauffé et de la vapeur, en un gaz brut.

3. Procédé selon la revendication 2, **caractérisé par le fait que** le gaz brut produit reformé et refroidi est divisé en deux courants partiels, l'un des courants partiels étant amené par une conduite à un réacteur de conversion de CO à l'intérieur duquel du monoxyde de carbone contenu dans le gaz brut est converti, avec de la vapeur d'eau, en dioxyde de carbone et en hydrogène.

4. Procédé selon la revendication 3, **caractérisé par le fait que** le gaz de synthèse produit à la sortie du réacteur de conversion est mélangé à nouveau avec l'autre courant partiel de gaz brut pour donner un courant total de gaz de synthèse.

5. Procédé selon la revendication 4, **caractérisé par le fait que** le courant total de gaz de synthèse est refroidi et est amené à un épurateur pour séparer le CO₂ et l'H₂S.

6. Procédé selon l'une quelconque des revendications 3 à 5, **caractérisé par le fait que** la répartition quantitative des gaz bruts en deux courants partiels est effectuée de telle sorte que le gaz de synthèse obtenu en aval de l'épurateur présente la quantité de matière (nombre stoechiométrique) d'environ 2,05 à 2.1 nécessaire à la synthèse de méthanol subséquente.

7. Procédé selon l'une quelconque des revendications 1 à 6, **caractérisé par le fait que** le gaz de synthèse produit est comprimé et, ensuite, converti de façon catalytique en méthanol dans un système dual se composant d'un réacteur refroidi à l'eau et d'un réacteur refroidi au gaz, et un méthanol brut est obtenu par condensation.

8. Procédé selon la revendication 7, **caractérisé par le fait que**, durant la synthèse de méthanol, une partie de gaz de synthèse est retirée du circuit, est mise en circulation et est ainsi comprimée à la pression de fonctionnement requise.

9. Procédé selon la revendication 7 ou 8, **caractérisé par le fait que** le méthanol brut condensé est dégazé et ensuite purifié de composés à bas point d'ébullition et à point d'ébullition plus élevé, dans lequel la purification par voie de distillation est effectuée à des températures comprises entre 70 et 140 °C, et une teneur en eau résiduelle d'au moins 3 à 5 % s'établit dans le méthanol.

10. Procédé selon la revendication 9, **caractérisé par le fait que** le méthanol distillé est converti ensuite de façon catalytique, dans un réacteur à lit fixe (réacteur DME), en un mélange DME (diméthyléther)/méthanol/eau, et est converti dans d'autres réacteurs fonctionnant de façon adiabatique, dans la plage de températures allant de 320 à 420 °C, en un mélange d'hydrocarbures/eau, dans lequel, pour le réglage de la température, on amène du gaz de recyclage qui est prise dans une unité de dégazage montée en aval.

11. Procédé selon l'une quelconque des revendications 1 à 10, **caractérisé par le fait que** le mélange d'hydrocarbures formé est déshydraté et dégazé avant la mise en contact avec le pétrole brut lourd.

12. Procédé selon l'une quelconque des revendications 1 à 11, **caractérisé par le fait que** le mélange d'hydrocarbures formé est amené directement, au niveau du gisement de pétrole, au pétrole brut lourd produit, en aval du point de prélèvement pour la partie prélevée de pétrole brut lourd, vu dans le direction de transport.

13. Procédé selon l'une quelconque des revendications 1 à 12, **caractérisé par le fait que** du mélange d'hydrocarbures traité est amené sur le côté d'aspiration à la pompe utilisée pour le transport du pétrole brut.

14. Procédé selon l'une quelconque des revendications 1 à 13, **caractérisé par le fait que** l'action de prélever la partie de pétrole brut lourd est réalisée de façon continue ou discontinue.

15. Procédé selon l'une quelconque des revendications 1 à 14, **caractérisé par le fait que** la viscosité du pétrole brut lourd produit est mesurée et que la quantité de mélange d'hydrocarbures est ajoutée de manière dosée en fonction du résultat actuel de mesure afin d'obtenir du pétrole brut léger.
